# EUROPEAN PATENT SPECIFICATION

(11) **EP 4 191 037 B1**
(45) Date of publication and mention of the grant of the patent: **25.03.2026**
(21) Application number: 21211820.2
(22) Date of filing: 01.12.2021
(51) Int. Cl.: F02C 3/22, F02C 7/08, F02C 7/10, F02C 7/264

(54) **METHOD FOR OPERATING A GAS TURBINE ENGINE**
VERFAHREN ZUM BETREIBEN EINES GASTURBINENTRIEBWERKS
PROCÉDÉ DE FONCTIONNEMENT D'UN MOTEUR À TURBINE À GAZ

(43) Date of publication of application: 07.06.2023
(73) Proprietor: Ansaldo Energia Switzerland AG, 5400 Baden (CH)
(72) Inventor: CIANI, Andrea, 5400 BADEN (CH); MAURER, Michael Thomas, 5400 BADEN (CH); PENNELL, Douglas, 5400 BADEN (CH)
(74) Representative: Studio Torta S.p.A.

(56) References cited:
- JP-A- 2001 107 748
- US-A1- 2008 271 703
- US-A1- 2017 234 543

## Description

### TECHNICAL FIELD

The present invention relates to a method for operating a gas turbine engine.

The gas turbine engine is preferably part of a power plant for electric power generation.

### BACKGROUND

Gas turbine engines comprising a compressor, a sequential combustion system and a turbine are known; the sequential combustion system has a first combustor where a first fuel is fed and is combusted with compressed air from the compressor generating a first hot gas and a second combustor where a second fuel is injected into the first hot gas (which could be partly expanded in a high pressure turbine or not) and is combusted by autoignition.

Traditionally gas turbine engines are fed with natural gas as a fuel, but gas turbine engines shall be able to correctly operate with different fuels having a higher reactivity than natural gas, such as hydrogen (pure hydrogen or a fuel mixture with a high percentage of hydrogen, e.g. 70% by volume or more, e.g. 90% or 95% or 98% by volume).

Sequential combustion systems are able to cope with high reactive fuels, thanks to the possibility of lowering the first stage flame temperature for reducing the reactivity at both the first and the second stages. Reactivity is measured by the flame propagation speed and depends on many factors, such as fuel composition, oxygen amount available for combustion, temperature, etc..

In order to cope with high reactivity fuels, a traditional combustion system, e.g. designed for operation with natural gas, can be operated with a lean fuel-air mixture at the first stage (i.e. mixture with a low fuel amount), so that a low flame propagation speed is achieved. The lean mixture at the first stage generates first hot gas with a low temperature, which causes a longer autoignition time at the second stage.

Therefore, the sequential combustion system can be regulated such that the high reactivity and thus flame propagation speed do not prevent a correct operation of the combustion system.

Nevertheless, regulation possibilities are limited by the need to achieve a correct combustion, in particular at the first stage, with limited emissions such as NOx emissions.

US 2017/234543 A1 discloses a method for operating a gas turbine engine, comprising compressing air in a compressor, combusting a fuel with the compressed air in a combustion system generating a hot gas and expanding the hot gas in a turbine, wherein combusting comprises heating the compressed air from the compressor to a predefined temperature in a heat exchanger, mixing in a burner the compressed air from the heat exchanger with a fuel generating a fuel-air mixture, combusting the fuel-air mixture by autoignition in a combustion chamber. Other examples of known methods are disclosed in JP 2001 107748 A and in US 2008/271703 A1.

### SUMMARY

An aspect of the invention includes providing a method by which a flexible operation of the gas turbine engine can be achieved.

Advantageously, such a flexible operation can be achieved with high reactive fuels being pure hydrogen or mixtures with at least 70% hydrogen content.

These and further aspects are attained by providing a method in accordance with the accompanying claims.

Advantageously, gas turbine engines, according to the invention, can operate in a wide operating window also with high reactive fuels, and with no constrains of LBO (lean blow off) at the first stage.

### BRIEF DESCRIPTION OF THE DRAWINGS

Further characteristics and advantages will be more apparent from the description of a gas turbine illustrated by way of non-limiting example in the accompanying drawings and by a non-exclusive embodiment of the method.
Figure 1 shows a gas turbine
Figures 2 through 5 show different examples of a combustors where the fuel-air mixture is combusted by autoignition.

### DETAILED DESCRIPTION OF EXEMPLARY EMBODIMENTS

With reference to the figures, these show a gas turbine engine 1 comprising a compressor 2, a combustion system 3 and a turbine 4.

The combustion system 3 comprises a heat exchanger 6 for heating compressed air from the compressor 2 to a predefined temperature and a burner 7 for mixing the compressed air from the heat exchanger 6 with a fuel generating a fuel-air mixture. The fuel-air mixture can be then combusted in a combustion chamber 9; combustion in the combustion chamber 9 occurs by autoignition.

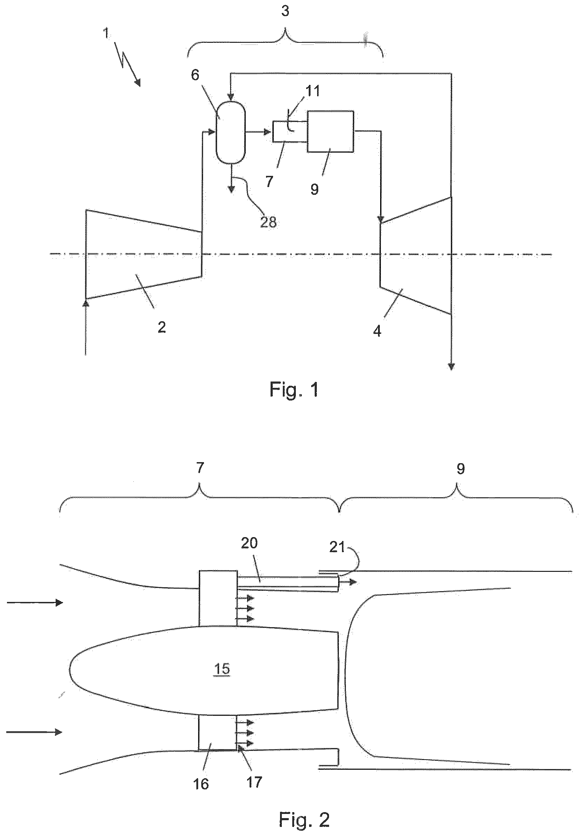

Figure 1 shows an example where the burner 7 has a tubular body with a lance 11 protruding in it. Possibly air swirlers upstream of the lance 11 (with reference to the compressed air flow) are also provided. The lance 11 carries the fuel that is fed in the burner 7 and is mixed with the compressed air from the heat exchanger 6.

Figures 2 through 5 show different embodiments of the burner 7 with a central body burner 15 and arms 16 provided with a fuel injection system 17.

Any type of heat exchanger may be used as the heat exchanger 6, but preferably it is a recuperation heat exchanger, i.e. a heat exchanger where air from the compressor 2 is heated against another heat stream from the gas turbine engine itself.

The recuperation heat exchanger 6 can be fed with the compressed air to be heated and with exhaust gas from the turbine, such that in the heat exchanger the exhaust gas is cooled and at the same time the compressed air is heated.

Alternatively, cooling air that has cooled different parts of the gas turbine 1, such as the combustion chamber 9, may also be used to heat the compressed air from the compressor 2; in such embodiments the heat exchanger 9 is fed with the compressed air to be heated and with cooling air from around the combustion chamber 9, such that in the heat exchanger 6 the cooling air from around the combustion chamber 9 is cooled and at the same time the compressed air from the compressor 2 is heated

The heat exchanger may be integrated in the gas turbine engine or may be a separate component.

Preferably, the combustion system 3 comprises a flame stabilizer 20, which is advantageously provided at the inlet 21 of the combustion chamber 9. The flame stabilizer 20 provides an ignition point for the mixture and may be useful to guarantee a correct combustion avoiding LBO and limited pulsations.

In different examples, the flame stabilizer 20 comprises a pilot burner, i.e. a small burner providing up to 20% or 15% or 10% or 5% of the total fuel supplied in the combustion chamber 9; the indicated fuel amount for the pilot burner has to be understood to mean the fuel amount supplied by all pilot burners, in case more than one pilot burner is foreseen. In addition, the pilot burner 20 can be arranged for generating a diffusion flame or a premixed flame. In both cases, since the flame generated by the pilot burner is small, it can be relatively rich thus very stable and can thus stabilize the combustion of larger burners.

The flame stabilizer 20 can also comprise a plasma torch, i.e. a torch that is fed with electric power and is able to generate a plasma.

Preferably, when the combustion system has more burners, each burner has associated at least one pilot burner and preferably multiple pilot burners symmetrically provided around the (main) burner are associated to each (main) burner.

The attached figures show different examples of flame stabilizers 20.

Figure 2 shows an example of a flame stabilizer 20 provided at the inlet 21 of the combustion chamber 9 and provided at the side of a burner (main burner).

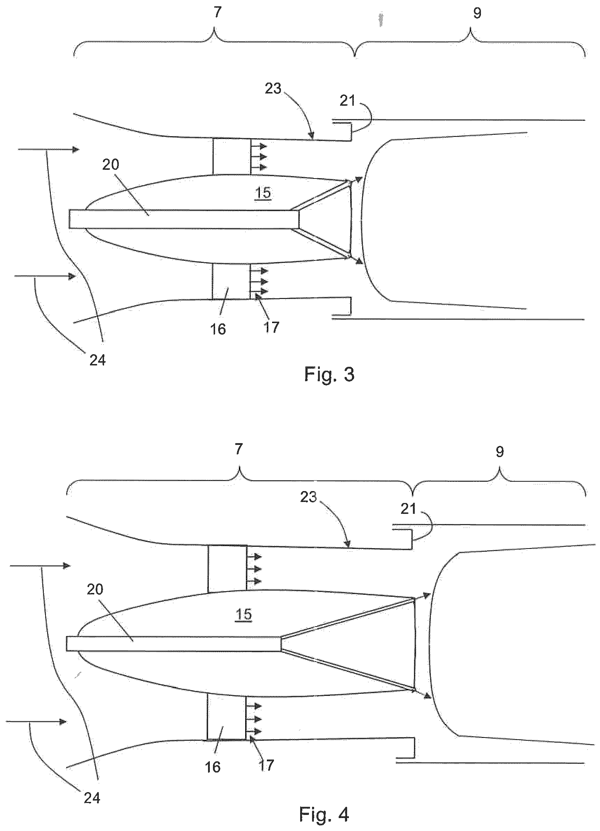

Figures 3 and 4 show different examples of a flame stabilizer 20 provided at the inlet 21 of the combustion chamber 9 and provided in the central body burner 15. The two examples of figures 3 and 4 differ in the length of the portion 23 of the burner 7 downstream of the arms 16 (with reference to the compressed air flow 24); such a different portion 23 provides different time for mixing and allows autoignition of the fuel in the combustion chamber 9.

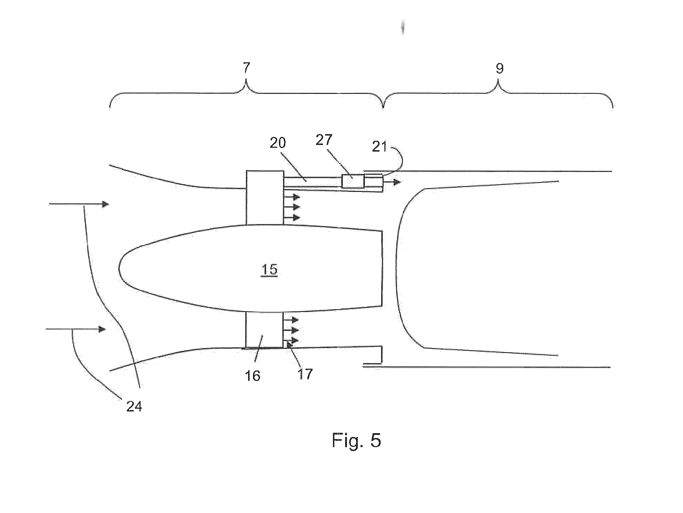

Figure 5 shows an example of a flame stabilizer 20 provided at the inlet 21 of the combustion chamber 9 and provided at the side of a burner (main burner). In addition this example also shows a mixer 27 for air and fuel, for the flame stabilizer 20 to generate a premixed flame or partly premixed (and partly diffusion) flame.

The operation of the gas turbine engine is apparent from that described and illustrated and is substantially the following.

Air is compressed at the compressor 2 and is at the same time heated as a result of the compression. The air temperature at the outlet of the compressor 2 may be above the autoignition temperature of a high reactive fuel such as pure hydrogen or mixture with a high hydrogen content, but not high enough to allow a sufficiently fast autoignition of the fuel when mixed with the compressed air; in other words, the time for autoignition after fuel injection may be too long for the turbine to correctly operate.

The air from the compressor 2 is thus fed in the heat exchanger 6, where it is heated against the exhaust gas from the turbine (in the example shown, but as described above other possibilities may be envisaged).

Air, which has been compressed at the compressor 2 and heated (or further heated because it was already heated during compression) at the heat exchanger 6, is thus fed in the burner 7, where fuel is injected.

While passing through the burner 7 the fuel is mixed with the air and heated by the air, generating a compressed, high temperature fuel-air mixture.

When the fuel-air mixture enters the combustion chamber 9, the fuel auto ignites and starts to burn.

In case the flame stabilizer 20 is foreseen, it stabilizes the combustion by providing a fixed and stable combustion point. For example, the flame generated by the flame stabilizer 20 can help autoignition of the fuel by providing local high temperature areas.

The combustion generates hot gas, which is expanded in the turbine 4. The turbine 4 discharges exhaust gas that is used to heat the compressed air in the heat exchanger 6 and is then discharged to the atmosphere (reference 28).

Heating at the heat exchanger 6 occurs without a flame, therefore no constrains imposed by the combustion exist. For example, in case it is desired to reduce the temperature of the first hot gas fed into the combustion chamber 9, in order to cope with the high reactivity of the fuel, it is possible to reduce the heating at the heat exchanger 6; such a regulation is not limited by risk of LBO (lean blow off), because no combustion is foreseen at the heat exchanger. The flexibility of operation is therefore ensured. In addition, the operating windows of the gas turbine engine is wide. The present invention refers to a method for operating a gas turbine engine. The method comprises compressing air in the compressor 2, combusting the fuel with the compressed air in the combustion system 3 generating the hot gas and expanding the hot gas in the turbine 4.

Combusting comprises heating in the heat exchanger 6 the compressed air from the compressor 2 to a predefined temperature and mixing in the burner 7 the compressed air from the heat exchanger 6 with the fuel generating a fuel-air mixture, and then combusting the fuel-air mixture by autoignition in the combustion chamber 9.

The predefined temperature is such that it is not only above the autoignition temperature of the fuel, but it also allows a sufficiently short autoignition time, i.e. time from injection to the start of autoignition. The reference conditions for the autoignition temperature are the fuel condition in the combustion chamber, i.e. fuel-air ratio, temperature, pressure, etc. are those in the combustion chamber, because autoignition is more likely to occur there.

According to the invention, the autoignition occurs in a time window of 5-50 milliseconds and preferably 5-20 milliseconds from the injection of the fuel in the burner 7. Such a time window typically allows the fuel to mix with air, to pass through the burner and to enter the combustion chamber 9.

The flame stabilizer 20, if provided, may help autoignition by providing heat areas around the burner.

In general, an autoignition delay time may be defined, i.e. the time between the fuel injection and the autoignition start; thus the predefined temperature may be set, such that the predefined temperature corresponds to the defined autoignition delay time. The autoignition delay time is advantageously linked to the combustion system 3, i.e. the combustion system 3 requires an autoignition delay time for the mixture to pass through the burner 7 and ignite in the combustion chamber.

The gas turbine engine and method described are particularly advantageous when used to combust a high reactive fuel, such a hydrogen or a mixture with a high hydrogen content; it is anyhow clear that the gas turbine engine and method described may advantageously be used to combust any kind of fuel, i.e. also traditional fuel such as natural gas may be combusted in order to achieve an improved flexibility of operation.

Naturally the features described may be independently provided from one another. In practice the materials used and the dimensions can be chosen at will according to requirements and to the state of the art.

## Claims

1. A method for operating a gas turbine engine (1), comprising compressing air in a compressor (2), combusting a fuel with the compressed air in a combustion system (3) generating a hot gas and expanding the hot gas in a turbine (4), wherein combusting comprises heating the compressed air from the compressor (2) to a predefined temperature in a heat exchanger (6) above an autoignition temperature of the fuel, mixing in a burner (7) the compressed air from the heat exchanger (6) with a fuel generating a fuel-air mixture, combusting the fuel-air mixture by autoignition in a combustion chamber (9);
wherein the predefined temperature is set such that autoignition occurs in a time window of 5-50 milliseconds from the injection of the fuel in the burner (7);
**characterized in that** the fuel is hydrogen or a mixture with at least 70% hydrogen content by volume and an air temperature at the outlet of the compressor (2) is above the autoignition temperature for the fuel.

2. The method of claim 1, **characterized in that** combustion generates a flame in the combustion chamber, the method further comprising stabilizing the flame by a flame stabilizer (20).

## Patentansprüche

1. Verfahren zum Betreiben einer Gasturbinenanlage (1), welches das Verdichten von Luft in einem Kompressor (2), das Verbrennen eines Brennstoffs mit der verdichteten Luft in einem Verbrennungssystem (3), das Erzeugen eines heißen Gases und das Expandieren des heißen Gases in einer Turbine (4) umfasst, wobei das Verbrennen das Erhitzen der verdichteten Luft von dem Kompressor (2) auf eine vordefinierte Temperatur über einer Selbstentzündungstemperatur des Brennstoffs in einem Wärmetauscher (6), das Mischen der verdichteten Luft von dem Wärmetauscher (6) mit einem Brennstoff in einem Brenner (7), wodurch ein Brennstoff-Luft-Gemisch erzeugt wird, und das Verbrennen des Brennstoff-Luft-Gemischs durch Selbstentzündung in einer Brennkammer (9) umfasst;
wobei die vordefinierte Temperatur derart eingestellt wird, dass die Selbstentzündung in einem Zeitfenster zwischen 5 und 50 Millisekunden nach dem Einspritzen des Brennstoffs in den Brenner (7) erfolgt;
**dadurch gekennzeichnet, dass** der Brennstoff Wasserstoff oder ein Gemisch mit mindestens 70 Volumen-% Wasserstoffgehalt ist und eine Lufttemperatur am Auslass des Kompressors (2) über der Selbstentzündungstemperatur für den Brennstoff liegt.

2. Verfahren nach Anspruch 1, **dadurch gekennzeichnet, dass** die Verbrennung eine Flamme in der Brennkammer erzeugt, wobei das Verfahren ferner das Stabilisieren der Flamme durch einen Flammenstabilisator (20) umfasst.

## Revendications

1. Procédé pour faire fonctionner un moteur à turbine à gaz (1), comprenant la compression d'air dans un compresseur (2), la combustion d'un carburant avec l'air comprimé dans un système de combustion (3), ce qui génère un gaz chaud et dilate le gaz chaud dans une turbine (4), dans lequel la combustion comprend le chauffage de l'air comprimé provenant du compresseur (2) à une température prédéfinie dans un échangeur de chaleur (6) au-delà de la température d'autoallumage du carburant, le mélange dans un brûleur (7) de l'air comprimé provenant de l'échangeur de chaleur (6) avec un carburant, ce qui génère un mélange carburant-air, la combustion du mélange carburant-air par autoallumage dans une chambre de combustion (9) ;
dans lequel la température prédéfinie est établie de façon que l'autoallumage survienne dans un laps de temps de 5 à 50 millisecondes suivant l'injection du carburant dans le brûleur (7) ;
**caractérisé en ce que** le carburant est l'hydrogène ou un mélange ayant une teneur en hydrogène d'au moins 70 % en volume, et la température de l'air à la sortie du compresseur (2) est supérieure à la température d'autoallumage du carburant.

2. Procédé selon la revendication 1, **caractérisé en ce que** la combustion génère une flamme dans la chambre de combustion, le procédé comprenant en outre la stabilisation de la flamme par un stabilisateur de flamme (20).
